# EUROPEAN PATENT APPLICATION

(11) **EP 1 728 900 A1**
(43) Date of publication of application: **06.12.2006**
(21) Application number: 05721131.0
(22) Date of filing: 18.03.2005
(51) Int. Cl.: D01F 6/92, A41G 3/00, C09K 21/02, C09K 21/08, C09K 21/10, C09K 21/12, C09K 21/14

(54) **FLAME-RETARDANT ARTIFICIAL POLYESTER HAIR**

(30) Priority: 24.03.2004 JP 2004087035
(71) Applicant: KANEKA CORPORATION, Osaka-shi, Osaka 530-8288 (JP)
(72) Inventor: MASUDA, Toshiyuki, 6760806 (JP)
(74) Representative: Behnisch, Werner
(86) International application number: PCT/JP2005/004944
(87) International publication number: WO 2005/090658

(57) **Abstract**

Artificial polyester hair, which retains fiber physical properties of general polyester fibers such as heat resistance and a degree of strength and elongation, are excellent in the setting property, transparency and touch feeling, and has excellent flame retardancy, is provided. The flame retardant artificial polyester hair, which retains fiber properties such as heat resistance and a degree of strength and elongation and is excellent in suitability for setting, transparency and touch feeling, is **characterized by** being obtained by melt-spinning a composition obtained by melt-kneading a polyester together with a bromine-containing flame retardant, the bromine-containing flame retardant having a melting point of 160 to 320°C and a 5 % loss on heat temperature of 220 to 450 °C or the bromine-containing flame retardant being a mixture of a bromine-containing flame retardant (b1) having a 5 % loss on heat temperature of 220 to 310°C and a bromine-containig flame retardant (b2) having a having 5 % loss on heat temperature of at least 310°C.

## Description

### TECHNICAL FIELD

The present invention relates to flame retardant artificial polyester hair formed from a composition obtained by melt-kneading a bromine-containing flame retardant with a polyester.

### BACKGROUND ART

Since fibers comprising polyethylene terephthalate or polyester comprising polyethylene terephthalate as the main component have a high melting point and a high elasticity and excellent heat resistance and chemical resistance, they are widely used for curtains, rugs, clothes, blankets, sheets, table cloths, linings of chairs, wall materials, artificial hair, materials for an automobile interior, outdoor reinforcing materials, safety nets and the like.

On the other hand, with respect to hair products such as hair wigs, false hair, hair bands, and doll hair, human hair or artificial hair (modacrylic fibers and polyvinyl chloride fibers) have been conventionally used. However, human hair supply has become difficult and importance of artificial hair has been enhanced. Although Modacryl has been largely used as an artificial hair material by making a good use of a feature of flame retardancy, however, it has been insufficient in terms of a heat resistant temperature. Recently, artificial hair fibers using fibers comprising a polyester as the main component represented as polyethylene terephthalate excellent in heat resistance have been proposed. However, in the case of using them as the artificial hair material, it is required to impart flame retardancy from a viewpoint of safety. Since the conventional polyester fibers are easy-flammable, various trials so as to improve flame retardancy of the polyester fibers are made, for example, a process for preparing fibers from polyesters obtained by copolymerization of flame resistant monomers containing phosphorus atoms and a process of adding a flame retardant to polyester fibers are known.

As the former process of copolymerizing flame resistant monomers, a process of copolymerizing phosphorus compounds in which the phosphorus atom is a member of a ring and heat stability is excellent (JP-B-55-41610), a process of copolymerizing carboxyphosphinic acid (JP-B-53-13479), and a process of compounding or copolymerizing a phosphorus compound to a polyester containing polyallylate (JP-A-11-124732) are suggested. As an example applied with the above-mentioned flame retardant techniques to artificial hair, polyester fibers obtained by copolymerizing phosphorus compounds are proposed (JP-A-3-27105). However, since high flame resistance is required for the artificial hair, an amount of copolymerization is necessary to be increased for using these copolymerized polyester fibers for the artificial hair and, consequently, heat resistance of the polyester is considerably lowered and it becomes difficult to carry out melt-spinning or, in the case when flame closely approaches, there occurs another problem such that the polyester is melted and dripped, although it is not ignited or burned.

On the other hand, as the latter process of containing a flame retardant, a process of containing fine particles of a halogenated cycloalkane compound to polyester fibers (JP-A-3-57990) and a process of containing bromine atom-containing alkylcyclohexane (JP-A-1-24913) and the like are proposed. In the process of containing a flame retardant to the polyester fibers, in order to obtain sufficient flame resistance, a treatment temperature for containing is required to be a high temperature of at least 150°C, a treatment time for containing is necessary to be long, or it has a problem that a large amount of a flame retardant is necessary to be used, which causes problems such that physical properties of the fibers are lowered, productivity is lowered, and manufacturing cost is increased.

As described above, the present situation is that no artificial hair which retains fiber physical properties of general polyester fibers such as heat resistance and a degree of strength and elongation and are excellent in setting property and flame retardancy has been obtained yet.

### DISCLOSURE OF INVENTION

### PROBLEMS TO BE SOLVED BY THE INVENTION

An object of the present invention is to solve the conventional problems as described above and to provide artificial polyester hair which retains fiber physical properties of general polyester fibers such as heat resistance and a degree of strength and elongation, are excellent in setting property, transparency and touch feeling, and has excellent flame retardancy.

### MEANS TO SOLVE THE PROBLEMS

As a result of repeating intensive studies to solve the above mentioned problems, the inventors of the present invention reached completion of the present invention by finding that flame retardant artificial polyester hair which retains fiber physical properties of general polyester fibers such as heat resistance and a degree of strength and elongation and are excellent in the setting property and touch feeling can be obtained by melt-spinning a composition obtained by melt-kneading a bromine-containing flame retardant having a specific melting point and a 5 % loss on heat temperature.

Namely, the present invention related to the followings.
(1) Flame retardant artificial polyester hair, which is formed from a composition obtained by melt-kneading 5 to 30 parts by weight of a bromine-containing flame retardant (B) having a melting point of 160°C to 320°C and a 5 % loss on heat temperature of 220 to 450°C based on 100 parts by weight of a polyester (A) comprising at least one selected from the group consisting of polyalkylene terephthalate and a copolymered polyester comprising polyalkylene terephthalate as the main component.
(2) The flame retardant artificial polyester hair of (1), wherein the polyalkylene terephthalate is at least one kind of a polymer selected from the group consisting of polyethylene terephthalate, polypropylene terephthalate and polybutylene terephthalate.
(3) The flame retardant artificial polyester hair of (1) or (2), wherein the bromine-containing flame retardant (B) is a mixture of a bromine-containing flame retardant (b1) having a 5 % loss on heat temperature of 220 to 310°C and a bromine-containing flame retardant (b2) having a 5 % loss on heat temperature of 310 to 450°C, and the mixing ratio of (b1) and (b2) (weight ratio) is 20/80 to 80/20.
(4) The flame retardant artificial polyester hair of (3), wherein the bromine-containing flame retardant (B) is at least one kind of a flame retardant selected from the group consisting of hexabromocyclododecane, tris(tribromoneopentyl) phosphate, pentabromotoluene, hexabromobenzene, tetrabromophthalic anhydride, a decabromodiphenyl ether, tetrabromobisphenol A, tetrabromobisphenol A type polycarbonate oligomer, poly-4,4-isopropylidene bis(2,6-dibromophenyl) carbonate, 1,2 -bis(2,4,6-tribromophenoxy) ethane, 2,4,6-tris(2,4,6-tribromophenoxy)-1,3,5-triazine and bis(4-hydroxy-3,5-dibromophenyl)sulfone.
(5) The flame retardant artificial polyester hair of (3), wherein the component (b1) is at least one kind of a flame retardant selected from the group consisting of hexabromocyclododecane, dibromoneopentyl glycol, tris(tribromoneopentyl) phosphate, ethylene dibromide-4,4'-isopropylidene bis(2,6-dibromophenol) condensate, tris(2,3-dibromopropyl) isocyanuric acid, pentabromotoluene, hexabromobenzene, tetrabromophthalic anhydride, dialkyl tetrabromophthlate, tetrabromobisphenol A, tetrabromobisphenol A-bis(allyl ether), tetrabromobisphenol A-bis(hydroxyethyl ether), 1,2-bis(2,4,6-tribromophenoxy)ethane and octabromodiphenyl ether and the component (b2) is at least one kind of a flame retardant selected from the group consisting of decabromodiphenyl ether, tetrabromobisphenol A-bis(2,3-dibromopropyl ether), tetrabromobisphenol A type polycarbonate oligomer, poly-4,4-isopropylidene bis(2,6-dibromophenyl) carbonate, a pentabromobenzyl acrylate polymer, brominated polystyrene, a brominated epoxy resin, a brominated phenoxy resin, 2,4,6-tris(2,4,6-tribromophenoxy)-1,3,5-triazine, octabromotrimethylphenylindan, tetradecabromodiphenylphenoxybenzene, and bis(4-hydroxy-3,5-dibromophenyl)sulfone.
(6) The flame retardant artificial polyester hair of any one of (1) to (5), which is formed from a composition obtained by further mixing a flame retardant aid (C) with the polyester (A) and the bromine-containing flame retardant (B).
(7) The flame retardant artificial polyester hair of (6), wherein the flame retardant aid (C) is at least one selected from the group consisting of an antimony trioxide compound, an antimony pentoxide compound and sodium antimonate.
(8) The flame retardant artificial polyester hair of any one of (1) to (7), wherein the artificial hair is in the state of non-crimping fiber yarn.
(9) The flame retardant artificial polyester hair of any one of (1) to (8), wherein the artificial hair is spun-dyed.
(10) The flame retardant artificial polyester hair of any one of (1) to (9), wherein the artificial hair has a single fiber fineness of 10 to 100 dtex.

### EFFECT OF THE INVENTION

According to the present invention, artificial polyester hair, which retains fiber physical properties of general polyester fibers such as heat resistance and a degree of strength and elongation, are excellent in the setting property, transparency and touch feeling, and has excellent flame retardancy, can be obtained.

The flame retardant artificial polyester hair of the present invention is a fiber prepared by melt-spinning a composition obtained by melt-kneading a bromine-containing flame retardant (B) and a polyester (A) comprising at least one selected from the group consisting of polyalkylene terephthalate and a copolymered polyester comprising polyalkylene terephthalate as the main component.

As polyalkylene terephthalate and a copolymered polyester comprising polyalkylene terephthalate as the main component used as the polyester (A) in the present invention, examples are polyalkylene terephthalate such as polyethylene terephthalate, polypropylene terephthalate and polybutylene terephthalate, and/or a copolymered polyester comprising these polyalkylene terephthalates as the main component and a small amount of copolymer components. Polyethylene terephthalate, polypropylene terephthlate and polybutylene terephthalate are particularly preferable as the polyalkylene terephthalate from the viewpoints of availability and cost thereof.

The above wording, the main component, is referred to as comprising at least 80 % by mol.

As the above-described copolymer components, examples are multiple carbonic acid such as isophthalic acid, orthophthalic acid, naphthalene dicarboxylic acid, paraphenylene dicarboxylic acid, trimellitic acid, pyromellitic acid, succinic acid, glutaric acid, adipic acid, sberic acid, azelaic acid, sebacic acid, and dodecanedicarboxylic acid and derivatives thereof, dicarboxylic acid containing sulfonate salt such as 5-sodium sulfoisophthalic acid and dihydroxyethyl 5-sodium sulfoisophthalate, and derivatives thereof, and 1,2-propanediol, 1,3-propanediol, 1,4-butanediol, 1,6-hexanediol, neopentyl glycol, 1,4-cyclohexane dimethanol, diethylene glycol, polyethylene glycol, trimethylol propane, pentaerythritol, 4-hydroxybenzoic acid, ε-caprolactone and the like.

It is preferable to prepare the above copolymered polyester generally by reacting a polymer of terephthalic acid and/or derivatives thereof (for example, methyl terephthalate), and alkylene glycol, which is the main component with a small amount of a copolymer component from the viewpoints of stability and simplicity in operation, but the above copolymered polyester may be prepared by polymerizing a mixture containing further a small amount of a monomer or an oligomer, which is a copolymer component, into a mixture of terephthalic acid and/or derivatives thereof (for example, methyl terephthalate), which is to be the main component, and alkylene glycol.

As for the copolymered polyester, the above copolymer component may be poly condensed to the main chain and/or the side chain of polyalkylene terephthalate, which is the main component, and there is no particular limitation for a copolymerization process.

Specific examples of the copolymered polyester in which the above-described polyalkylene terephthalate which is the main component are a polyester copolymerized with an ethylene glycol ester of a bisphenol-A, in which polyethylene terephthalate is the main component, a polyester which is copolymerized with 1,4-cyclohexane dimethanol, and a polyester which is copolymerized with dihydroxyethyl 5-sodium sulfoisophthalate.

The above-described polyalkylene terephthalate and copolymered polyesters thereof may be used with one kind or may be used in combination of at least two kinds. Among these, polyethylene terephthalate, polypropylene terephthalate, polybutylene terephthalate, and a copolymered polyester thereof (such as a polyester copolymerized with an ethylene glycol ether of a bisphenol-A, in which polyethylene terephthalate is the main component, a polyester copolymerized with 1,4-cyclohexane dimethanol, and a polyester copolymerized with dihydroxyethyl 5-sodium sulfoisophthalate) are preferable, and a mixture of at least two kinds of these is also preferable.

The inherent viscosity of the polyester (A) used in the present invention is preferably 0.5 to 1.4, and more preferably 0.6 to 1.2. When the inherent viscosity of the polyester (A) is less than 0.5, mechanical strength of the obtained fiber tends to become lower, and when more than 1.4, the melt-viscosity becomes high along with increasing the molecular weight, it tends that the melt-spinning becomes difficult, or the fineness becomes uneven.

The bromine-containing flame retardant (B) used in the present invention preferably has a melting point of 160°C to 320°C and a 5 % loss on heat temperature of 220 to 450°C from the viewpoint that fiber physical properties and flame retardancy after melt-spinning can be retained.

When the melting point of the bromine-containing flame retardant (B) is less than 160°C, fusion of fibers tends to be caused in drawing and a heat treatment, or in curl setting, or heat resistance and iron setting property tend to be lowered. When the melting point is more than 320°C, since the bromine-containing flame retardant (B) can not be melted in melt-kneading with the polyester, lowering of the mechanical properties and yarn breakage during a spinning process are caused, and appearance of the fibers tends to be damaged.

When a 5 % loss on heat temperature of the bromine-containing flame retardant (B) is less than 220°C, since the flame retardant is decomposed in melt-kneading or melt-spinning, fiber physical properties and flame retardancy tend to be lowered, and when it exceeds 450°C, since the decomposition of the polyester is quicker than the flame retardant at the time of contacting with flame, the flame retardant effect tends to be hardly exerted.

Specific examples of the bromine-containing flame retardant having a melting point of 160 to 320°C and a 5 % loss on heat temperature of 220 to 450°C are hexabromocyclododecane, tris(tribromoneopentyl) phosphate, pentabromotoluene, hexabromobenzene, tetrabromophthalic anhydride, a decabromodiphenyl ether, tetrabromobisphenol A, tetrabromobisphenol A type polycarbonate oligomer, poly-4,4-isopropylidene bis(2,6-dibromophenyl) carbonate, 1,2-bis(2,4,6-tribromophenoxy)ethane, 2,4,6-tris(2,4,6-tribromophenoxy)-1,3,5-triazine and bis(4-hydroxy-3,5-dibromophenyl)sulfone. Among these, tris(tribromoneopentyl) phosphate, tetrabromobisphenol A, and tetrabromobisphenol A type polycarbonate oligomer are preferable form the viewpoint that influence on the fiber physical properties is small and sufficient flame retardancy can be obtained. These may be used alone or at least two kinds thereof may be used in combination.

It is preferable to use the bromine-containing flame retardant (b1) having a 5 % loss on heat temperature of 220 to 310°C and the bromine-containing flame retardant (b2) having a 5 % loss on heat temperature of 310 to 450°C in mixing as the bromine-containing flame retardant (B) used in the present invention from the viewpoint that fiber physical properties and flame retardancy can be easily obtained since the amount of (b1) to be used can be lowered, and a decomposition temperature is high due to the use of (b2) in combination, as opposed that there is the case when (b1) is used alone, since it is decomposed at a lower temperature than that of polyester decomposition, ignition is suppressed and flame retardancy can be obtained, however, (b1) is decomposed in melt-kneading and melt-spinning, and the fiber physical properties and flame retardancy may be lowered.

When a mixture of the component (b1) and the component (b2) is used as the bromine-containing flame retardant (B), the following compounds can be respectively exemplified. Examples of the bromine-containing flame retardant (b1) having a 5 % loss on heat temperature of 220 to 310°C are at least one kind of a flame retardant selected from the group consisting of hexabromocyclododecane, dibromoneopentyl glycol, tris(tribromoneopentyl) phosphate, ethylene dibromide-4,4'-isopropylidene bis(2,6-dibromophenol) condensate, tris(2,3-dibromopropyl) isocyanuric acid, pentabromotoluene, hexabromobenzene, tetrabromophthalic anhydride, dialkyl tetrabromophthlate, tetrabromobisphenol A, a tetrabromobisphenol A-bis(allyl ether), a tetrabromobisphenol A-bis(hydroxyethyl ether), 1,2-bis(2,4,6-tribromophenoxy)ethane and an octabromodiphenyl ether, and examples of the component (b2) having a 5 % loss on heat temperature of at least 310°C are at least one kind of a flame retardant selected from the group consisting of a decabromodiphenyl ether, a tetrabromobisphenol A-bis(2,3-dibromopropyl ether), tetrabromobisphenol A type polycarbonate oligomer, poly-4,4-isopropylidene bis(2,6-dibromophenyl) carbonate, a pentabromobenzyl acrylate polymer, brominated polystyrene, a brominated epoxy resin, a brominated phenoxy resin, 2,4,6-tris(2,4,6-tribromophenoxy)-1,3,5-triazine, octabromotrimethylphenylindan tetradecabromodiphenylphenoxybenzene and bis(4-hydroxy-3,5-dibromophenyl)sulfone. Among those, a combination of any one of a tris(tribromoneopentyl) phosphate, tetrabromobisphenol A, a tetrabromobisphenol A-bis(allyl ether), tetrabromobisphenol A-bis(hydroxyethyl ether) and 1,2-bis(2,4,6-tribromophenoxy)ethane as (b1) and any one of tetrabromobisphenol A type polycarbonate oligomer, poly-4,4-isopropylidene bis(2,6-dibromophenyl) carbonate, a brominated epoxy resin, a brominated phenoxy resin, 2,4,6-tris(2,4,6-tribromophenoxy)-1,3,5-triazine and octabromotrimethylphenylindane as (b2) is preferable from the viewpoints that influence on the fiber physical properties is small and excellent flame retardancy can be obtained.

The mixing ratio (weight ratio) of the component (b1) and the component (b2) in the bromine-containing flame retardant in the present invention is preferably 20/80 to 80/20, more preferably 25/75 to 75/25, and even more preferably 30/70 to 70/30. When the mixing ratio of (b1) is less than 20 % by weight, the bromine-containing flame retardant tends to be ignited in the initial stage of contacting with flame, and when it exceeds 80 % by weight, the fiber physical properties tend to be lowered.

The amount to be used of the bromine-containing flame retardant (B) in the present invention is preferably 5 to 30 parts by weight, more preferably 6 to 25 parts by weight, and further more preferably 7 to 20 parts by weight based 100 parts by weight of the polyester (A). When the amount to be used of the bromine-containing flame retardant (B) is less than 5 parts by weight, the effect of flame retardancy tends to become difficult to be obtained, and when it exceeds 30 parts by weight, the mechanical properties, heat resistance, and dripping resistance tend to be damaged.

In the present invention, excellent flame retardancy can be exerted by using the bromine-containing flame retardant (B), and the flame retardancy can be further enhanced by further compounding a flame retardant aid (C).

The flame retardant aid (C) used in the present invention is not particularly limited, any of generally used flame retardant aids may be used, and from the viewpoints of the improvement in flame retardancy, fiber physical properties and process stability, it is preferable to use an antimony compound.

An antimony flame retardant aid used in the present invention is not particularly limited, and examples thereof are an antimony trioxide compound, an antimony pentoxide compound and sodium antimonate.

The particle size of the antimony flame retardant aid used in the present invention is not particularly limited, however, it is preferably 0.02 to 5 µm, more preferably 0.02 to 3 µm, and further more preferably 0.02 to 1 µm. In addition, the flame retardant aid may be surface-treated with an epoxy compound, a silane compound, an isocyanate compound and a titanate compound and the like.

The amount to be used of the flame retardant aid (C) used in the present invention is not particularly limited, however, it is preferably 0.1 to 5 parts by weight, more preferably 0.2 to 3 parts by weight, and further more preferably 0.3 to 2 parts by weight based on 100 parts by weight of the polyester (A). When the amount to be used of the flame retardant aid (C) is less than 0.1 part by weight, the improvement in flame retardancy tends to be small and when it exceeds 5 parts by weight, appearance, hue and coloration thereof tend to be damaged.

The polyester fibers used for the present invention can be prepared by dry-blending respective components, thereafter, melt-kneading the mixture by using various kinds of general kneaders.

Examples of the kneaders are a single screw extruder, a twin screw extruder, a roll, a Banbury mixer and a kneader. Among these, a twin screw extruder is preferable from the viewpoints of adjustment of a degree of kneading and simplicity in the operation.

The composition for the present invention can be obtained by, for example, melt-kneading the respective components at a barrel temperature of 260 to 300°C, a discharge amount of 50 to 150 kg/hr, and a screw rotational speed of 150 to 200 rmp with a twin-screw extruder having a screw diameter of 45 mm, taking up a strand out of dies, and after cooling with water, pelletizing the strand with a strand cutter.

The artificial polyester hair of the present invention can be prepared by melt-spinning the above-described polyester composition with a general melt-spinning process.

Namely, for example, temperatures of an extruder, a gear pump, a spinning cap etc are set at 270 to 310°C, melt-spinning is performed, and the extruded yarn is passed through a heating tube, thereafter, cooled to at most a glass transition point and drawn up at a speed of 50 to 5000 m/min to obtain an extruded yarn. It is also possible to control the fineness by cooling the extruded yarn in a water bath containing water for cooling. A temperature and a length of the heating tube, a temperature and an amount of blowing of cooling wind, a temperature of the cooling bath, a cooling time, and a drawing speed can be suitably be adjusted according to an amount of discharge and the number of openings of the spinnerets.

The obtained spun yarn is thermally drawn, and drawing may be carried out by either of the two-step process, in which the spun yarn is taken up once then drawn, or the direct-spinning drawing process, in which the spun yarn is continuously drawn without taking up. Thermal drawing is carried out by a single-stage drawing process or a multiple-stage drawing process having at least two stages. As means for heating in thermal drawing, a heating roller, a heat plate, a steam jet apparatus, a hot water bath and the like can be used, and these can be suitably combined to use.

Various additives such as heat resistant agent, a photostabilizer, a fluorescent agent, an antioxidant, an antistatic agent, a pigment, a plasticizer, and a lubricant may be contained in the polyester fiber (B) in the present invention according to the necessity. Spun-dyed fibers can be obtained by particularly containing a pigment.

Flame retardant artificial polyester hair obtained by the present invention is in the state of non-crimping fiber yarn, and those having a fineness of generally 10 to 100 dtex and further 20 to 90 dtex are suitable for the artificial hair. It is preferable for the artificial hair to have heat resistance capable of using a beauty thermal tool (hair iron) at 160 to 200°C, to be hardly ignited, and to have self-extinguishing property.

When the flame retardant polyester fiber (B) of the present invention is spun-dyed, it can be used as it is, and when the flame retardant polyester fiber (B) is not spun-dyed, it can be dyed under the same conditions as ordinary flame retardation polyester fibers. As the pigment, the dye, the auxiliary agent etc used for dyeing, ones having excellent weather resistance and flame resistance are preferable.

The flame retardant artificial polyester fiber in the present invention is excellent in curl setting property using a beauty thermal tool (hair iron) and also excellent in holdability of curl. Further, the fiber can become more similar to human hair by using oil solutions such as a fiber-surface treating agent and a softener to impart the touch feeling and the texture.

The flame retardant artificial polyester hair of the present invention may be used in combination with other artificial hair material such as Modacrylic fibers, polyvinyl chloride fibers, and nylon fibers, or may be used in combination with human hair.

### BEST MODE FOR CARRYING OUT THE INVENTION

Then, the present invention is further explained in detail based on Examples, however, the present invention is not limited thereto.

### EXAMPLES

The methods of measuring characteristic values shown in the following examples are as follows.

### (Degree of strength and elongation)

The tensile strength and elongation of filaments is measured by using a tension compression tester (INTESCO Model 201, manufactured by INTESCO Inc.). Taking one filament having a length of 40 mm, both 10 mm ends of the filament having a length of 40 mm are pinched with mounting paper (thin paper) on which double-coated tape adhered with an adhesive agent is stuck, and dried with wind overnight to prepare a test sample having a length of 20 mm. The sample was loaded in a tester, and tensile strength and elongation at break is measured by conducting a test at a temperature of 24°C, humidity of at most 80 %, a load of 1/30 gF × fineness (denier), and a tensile speed of 20 mm/min. The test is repeated ten times under the same conditions, and the average value is referred to as the degree of strength and elongation of the filament.

### (Transparency)

A tow filament having a length of 30 cm and a total fineness of 100,000 dtex is evaluated with visual observation under the sunlight.
○: there are transparency and depth in colors (brightness).
△: there is slight opacity (foggy).
×: there is opacity and no depth in colors.

### (Touch feeling)

A tow filament having a length of 30 cm and total fineness of 100,000 dtex is touched with fingers to evaluate stickiness on the surface of the filament.
○: there is no stickiness.
△: there is slight stickiness.
×: there is stickiness.

### (Flame retardancy)

Each filament having a fineness of about 50 dtex is cut into 150 mm length and 0.7 g of the cut filament is bundled, and one end of the bundle is pinched with a clump and fixed to a stand to vertically hang the cut filaments. Flame with a length of 20 mm is brought into contact with the fixed filament having an effective length of 120 cm for 3 seconds to be burned, and flame retardancy is evaluated.
⊚: flame remaining time is 0 second (the filament is not initiated).
○: flame remaining time is less than 3 seconds.
△: flame remaining time is from 3 to 10 seconds.
× : flame remaining time is at least 10 seconds.

### (Limiting oxygen index, LOI-value)

16 cm/0.25 g of filaments is weighted, and the both ends of the filaments are lightly bundled with a double-stick tape, and the filaments are pinched and then twisted with a twist device. After the filaments are sufficiently twisted, they are folded in two right at the middle of the sample, and the resulting two filaments are twisted together. Then, the ends of the filaments are stuck with a sellotape so that the entire length becomes 7 cm. The filaments are pre-dried at 105°C for 60 minutes, and further dried in a desiccator for at least 30 minutes. The dried sample is adjusted to have the specified oxygen concentration, after 40 seconds, the sample is ignited from the upper part with an igniter in which flame is restricted to be 8 to 12 mm, and the igniter is separated away after ignition. An oxygen concentration at which the sample is burned by at least 5 cm or continues to be burned for at least 3 minutes is examined. The test is repeatedly conducted three times under the same conditions to obtain a limiting oxygen index (hereinafter, referred to as LOI-value).

### (Iron setting property)

The iron setting property represents easiness in curl setting by a hair iron and an index of the holdability for a shape of curl. Filaments were preheated by being lightly sandwiched and rubber by a hair iron heated at 180°C three times. Fusion among the filaments at this time, combing, shrinkage in the filament, and yarn breakage are evaluated with the visual observation. Subsequently, the pre-heated filament is wound around the hair iron, and maintained for 10 seconds, and the iron is pulled out. The easiness in pulling out the iron (rod-out property) and holdability for curl when the iron is pulled out are evaluated with the visual observation.

### Fusion among filaments

○: no fusion is caused.
△: fusion is slightly caused.
×: fusion is caused.

### Shrinkage/yarn breakage

○: no shrinkage and yarn breakage is caused.
△: shrinkage and yarn breakage are slightly caused.
×: shrinkage and yarn breakage are caused.

### Rod-out

○: an iron rod is smoothly pulled out.
△: an iron rod is slightly difficult to be pulled out.
×: an iron rod is difficult to be pulled out.

### Setting property

○: a shape of curling is maintained.
△: a shape of curling is slightly distorted.
×: a shape of curling is distorted.

### (Water amount)

An amount of water content of the obtained composition and pellets were measured by a Karl Fischer's method water meter.

### EXAMPLE 1 to 8

Compositions having ratios shown in Table 1 were dried to contain an amount of water of at most 100 ppm, 2 parts of a polyester pellet for coloring, PESTM6100 BLACK (available from Dainichiseika Color & Chemicals Mfg. Co. Ltd., an amount of carbon black is 30 %, polyester is contained in the component (A)) was added and dry-blended, the mixture was supplied to a twin screw extruder (TEX44 manufactured by Japan Steel Works, LTD.) and melt-kneaded at a resin temperature of 280°C to be pelletized, thereafter, dried so as to have a water amount of at most 100 ppm. Subsequently, a molten polymer was discharged from the spinneret having a circular section nozzle hole with a nozzle diameter of 0.5 mm φ by using a molten fiber spinner (SV30 manufactured by SHINKO MACHINERY CO., LTD.) at a resin temperature of 280°C. The fiber was air-cooled with cooling wind of 20°C, then, an undrawn yarn was obtained by rolling up at the speed of 100 m/min. The obtained undrawn yarn was drawn to form a four-fold drawn yarn by using a heat roll heated at 85°C, a heat treatment was conducted by using a heat roll heated at 200°C, and the yarn was rolled up at a speed of 30 m/min to obtain polyester fibers (multi-filament) having a single fiber fineness of approximately 50 dtex.

**TABLE 1**

| | Examples | | | | | | | | Comparative Examples | | |
|---|---|---|---|---|---|---|---|---|---|---|---|
| | 1 | 2 | 3 | 4 | 5 | 6 | 7 | 8 | 1 | 2 | 3 |
| Polyethylene terephthalate *¹ | 100 | 100 | 100 | 100 | 100 | 100 | 100 | 100 | 100 | 100 | 100 |
| Pentabromotoluene *² | 16 | 12 | | | 5 | 5 | | 8 | | | |
| Tetrabromobisphenol A *³ | | | 15 | | | | | | | | |
| 2,4,6-tris(2,4,6-tribromophenoxy)-1,3,5-triazine *⁴ | | | | 15 | | | | | | | |
| 1,2-bis(2,4,6-tribromophenoxy)ethane *⁵ | | | | | | | 5 | | | | |
| Poly-4,4-isopropylidene bis(2,6-dibromophenyl) | | | | | 10 | 10 | 10 | | | | |
| carbonate *⁶ | | | | | | | | | | | |
| Octabromotrimethyl phenylindan *⁷ | | | | | | | | 4 | | | |
| Tetrabromocyclooctane *⁸ | | | | | | | | | 12 | | 4 |
| Ethylene bis(tetrabromophthalimido) *⁹ | | | | | | | | | | 12 | 8 |
| Sb₂₀₃ *¹⁰ | | 4 | | | | 3 | | | | | |

| | | | | | | | | | | | |
|---|---|---|---|---|---|---|---|---|---|---|---|
| *1 Belpet EFG-85A, IV = 0.85, available from Kanebo Gohsen Ltd. *2 available from MANAC Incorporated., melting point: 280 to 290°C, 5% loss on heat temperature: 250°C *3 available from TEIJIN CHEMICALS LTD., melting point: 178 to 181°C, 5% loss on heat temperature: 260°C *4 available from DAI-ICHI KOGYO SEIYAKU CO., LTD., melting point: 230 °C, 5% loss on heat temperature: 360°C *5 available from Great Lakes, Ltd., melting point: 223 to 228°C, 5% loss on heat temperature: 276°C *6 available from TEIJIN CHEMICALS LTD., melting point: 230 to 250°C, 5% loss on heat temperature: 444°C *7 available from_Bromchem Fareast, Ltd., melting point: 218 to 223°C, 5% loss on heat temperature: 325°C *8 available from Albemarle Corporation., melting point: 103°C, 5% loss on heat temperature: 167°C *9 available from Albemarle Corporation., melting point: 456°C, 5% loss on heat temperature: 407°C *10 POTOX-U, available from NIHON SEIKO CO., LTD. | | | | | | | | | | | |

A degree of strength and elongation, transparency, touch feeling, flame retardancy, and iron setting property were evaluated by using the obtained fibers, and the results are shown in Table 2.

**TABLE 2**

| | Examples | | | | | | | | Comparative Examples | | |
|---|---|---|---|---|---|---|---|---|---|---|---|
| | 1 | 2 | 3 | 4 | 5 | 6 | 7 | 8 | 1 | 2 | 3 |
| Fineness (dtex) | 51 | 52 | 48 | 49 | 49 | 51 | 52 | 50 | - | 48 | 50 |
| Strength at break (cN/dtex) | 2.4 | 2.2 | 2.0 | 2.4 | 2.2 | 2.0 | 2.3 | 2.5 | - | 1.7 | 1.8 |
| Elongation (%) | 50 | 45 | 48 | 41 | 48 | 41 | 46 | 44 | - | 39 | 43 |
| Transparency | ○ | ○ | ○ | ○ | ○ | ○ | ○ | ○ | - | × | △ |
| Touch feeling (stickiness) | ○ | ○ | ○ | ○ | ○ | ○ | ○ | ○ | - | ○ | × |
| Flame retardancy Flammability | ○ | ⊚ | ○ | ○ | ○ | ⊚ | ○ | ⊚ | - | ○ | △ |
| LOI(%) | 28 | 32 | 28 | 29 | 28 | 30 | 28 | 30 | - | 27 | 32 |
| Iron setting (180°C) Fusion | ○ | ○ | ○ | ○ | ○ | ○ | ○ | ○ | - | ○ | × |
| Shrinkage/yarn breakage | ○ | ○ | ○ | ○ | ○ | ○ | ○ | ○ | - | ○ | ○ |
| Rod-out | △ | △ | △ | ○ | ○ | ○ | ○ | ○ | - | Δ | × |
| Setting property | ○ | ○ | ○ | ○ | ○ | ○ | ○ | ○ | - | △ | △ |

### COMPARATIVE EXAMPLES 1 to 3

The compositions having ratios shown in Table 1 were dried to have a amount of water of at most 100 ppm and polyester fibers (multi-filament) having a single fiber fineness of about 50 dtex were obtained in the same manner as Examples.

With respect to Comparative Example 1, since the decomposition temperature of the flame retardant was low, the spinning processability was significantly lowered and no filament was obtained.

A degree of strength and elongation, transparency, touch feeling, flame retardancy and iron setting property of the obtained fibers were evaluated and the results are shown in Table 2.

As shown in Table 2, lowering of touch feeling and iron setting property was not caused in Examples as compared with those in Comparative Examples, and it was confirmed that excellent flame retardancy was provided by adding a bromine-containing flame retardant having a melting point of 160°C to 320°C and a 5 % loss on heat temperature of 220 to 450°C, or a mixture of a bromine-containing flame retardant (b1) having a 5 % loss on heat temperature of 220 to 310°C and a bromine-containing flame retardant (b2) having a 5 % loss on heat temperature of at least 310°C.

Accordingly, it was confirmed that fibers for flame retardant artificial polyester hair obtained by using a composition containing bromine-containing flame retardants of the present invention becomes possible to be effectively used for artificial hair, wherein transparency, touch feeling, setting property and flame retardancy are improved with retaining mechanical properties and thermal properties of a polyester, compared with conventional fibers for artificial hair.

## Claims

1. Flame retardant artificial polyester hair, which is formed from a composition obtained by melt-kneading 5 to 30 parts by weight of a bromine-containing flame retardant (B) having a melting point of 160°C to 320°C and a 5 % loss on heat temperature of 220 to 450°C based on 100 parts by weight of a polyester (A) comprising at least one selected from the group consisting of polyalkylene terephthalate and a copolymered polyester comprising polyalkylene terephthalate as the main component.

2. The flame retardant artificial polyester hair of Claim 1, wherein the polyalkylene terephthalate is at least one kind of a polymer selected from the group consisting of polyethylene terephthalate, polypropylene terephthalate and polybutylene terephthalate.

3. The flame retardant artificial polyester hair of Claim 1 or 2, wherein the bromine-containing flame retardant (B) is a mixture of a bromine-containing flame retardant (b1) having a 5 % loss on heat temperature of 220 to 310°C and a bromine-containing flame retardant (b2) having a 5 % loss on heat temperature of 310 to 450°C, and the mixing ratio of (b1) and (b2) (weight ratio) is 20/80 to 80/20.

4. The flame retardant artificial polyester hair of Claim 3, wherein the bromine-containing flame retardant (B) is at least one kind of a flame retardant selected from the group consisting of hexabromocyclododecane, tris(tribromoneopentyl) phosphate, pentabromotoluene, hexabromobenzene, tetrabromophthalic anhydride, a decabromodiphenyl ether, tetrabromobisphenol A, tetrabromobisphenol A type polycarbonate oligomer, poly-4,4-isopropylidene bis(2,6-dibromophenyl) carbonate, 1,2-bis(2,4,6-tribromophenoxy)ethane, 2,4,6-tris(2,4,6-tribromophenoxy)-1,3,5-triazine and bis(4-hydroxy-3,5-dibromophenyl)sulfone.

5. The flame retardant artificial polyester hair of Claim 3, wherein the component (b1) is at least one kind of a flame retardant selected from the group consisting of hexabromocyclododecane, dibromoneopentyl glycol, tris(tribromoneopentyl) phosphate, ethylene dibromide-4,4'-isopropylidene bis(2,6-dibromophenol) condensate, tris(2,3-dibromopropyl) isocyanuric acid, pentabromotoluene, hexabromobenzene, tetrabromophthalic anhydride, dialkyl tetrabromophthlate, tetrabromobisphenol A, tetrabromobisphenol A-bis(allyl ether), tetrabromobisphenol A-bis(hydroxyethyl ether), 1,2-bis(2,4,6-tribromophenoxy)ethane and octabromodiphenyl ether and the component (b2) is at least one kind of a flame retardant selected from the group consisting of decabromodiphenyl ether, tetrabromobisphenol A-bis(2,3-dibromopropyl ether), tetrabromobisphenol A type polycarbonate oligomer, poly-4,4-isopropylidene bis(2,6-dibromophenyl) carbonate, a pentabromobenzyl acrylate polymer, brominated polystyrene, a brominated epoxy resin, a brominated phenoxy resin, 2,4,6-tris(2,4,6-tribromophenoxy)-1,3,5-triazine, octabromotrimethylphenylindan, tetradecabromodiphenylphenoxybenzene, and bis(4-hydroxy-3,5-dibromophenyl)sulfone.

6. The flame retardant artificial polyester hair of any one of Claims 1 to 5, which is formed from a composition obtained by further mixing a flame retardant aid (C) with the polyester (A) and the bromine-containing flame retardant (B).

7. The flame retardant artificial polyester hair of Claim 6, wherein the flame retardant aid (C) is at least one selected from the group consisting of an antimony trioxide compound, an antimony pentoxide compound and sodium antimonate.

8. The flame retardant artificial polyester hair of any one of Claims 1 to 7, wherein the artificial hair is in the state of non-crimping fiber yarn.

9. The flame retardant artificial polyester hair of any one of Claims 1 to 8, wherein the artificial hair is spun-dyed.

10. The flame retardant artificial polyester hair of any one of Claims 1 to 9, wherein the artificial hair has a single fiber fineness of 10 to 100 dtex.
